# EUROPÄISCHE PATENTSCHRIFT

(11) **EP 2 284 414 B1**
(45) Veröffentlichungstag und Bekanntmachung des Hinweises auf die Patenterteilung: **02.05.2012**
(21) Anmeldenummer: 09010417.5
(22) Anmeldetag: 12.08.2009
(51) Int. Cl.: F16D 35/02

(54) **Flüssigkeitsreibungskupplung**
Fluid friction clutch
Embrayage à friction de liquide

(43) Veröffentlichungstag der Anmeldung: 16.02.2011
(73) Patentinhaber: BorgWarner, Inc., Auburn Hills, MI 48326-2872 (US)
(72) Erfinder: Buchholz, Thomas, 78333 Stockach (DE); Sorg, Wolfgang, 88263 Horgenzell (DE)
(74) Vertreter: Schmitz, Hans-Werner

(56) Entgegenhaltungen:
- DE-A1- 19 749 342
- US-A- 6 026 943

## Beschreibung

Die Erfindung betrifft eine Flüssigkeitsreibungskupplung gemäß dem Oberbegriff des Anspruches 1. Eine derartige Kepplung ist aus der US-A-6 026 943 Bekannt.

Eine weitere Flüssigkeitsreibungskupplung ist aus der EP 1 731 787 B1 bekannt.

Aus der DE 197 49 342 A1 ist eine Visko-Kupplung zum Antrieb von KFZ-Klimaverdichtern bekannt, bei der zur Steuerung des Füllgrades von Fluid in einer Arbeitskammer der Durchsatz von Fluid durch den an einen Eingangsabschnitt eines Schöpfrohres anschließenden Rohrabschnitt mittels eines Ventils gesteuert wird. Im Rahmen der Erfindung durchgeführte Untersuchungen haben jedoch ergeben, dass ein derartiges Ventil insofern Probleme verursacht, als es äußerst schwierig ist, annehmbare Leistungsergebnisse zu erreichen.

Es ist daher Aufgabe der vorliegenden Erfindung, eine Flüssigkeitsreibungskupplung der im Oberbegriff des Anspruches 1 angegebenen Art zu schaffen, mit der es auf einfache Art und Weise ohne Verwendung eines Ventils möglich ist, einen variablen Kupplungsflüssigkeitsfluss zu erzielen.

Die Lösung dieser Aufgabe erfolgt durch die Merkmale des Anspruchs 1.

Durch das Vorsehen eines drehbar gelagerten abtremsbaren Pumpenelementes, das mit dem Gehäuse einen Scherspalt definiert, wird es möglich gemacht, auf einfache Art und Weise durch Ausnutzung einer Differenzdrehzahl zwischen dem Pumpenelement und dem Gehäuse bzw. der Primärseite der Flüssigkeitsreibungskupplung einen variablen Volumenstrom von der Vorwärtskammer in die Arbeitskammer zu erzeugen, ohne dass es hierfür nötig ist, zusätzlich ein steuerbares Ventil in den Strömungsweg zu integrieren.

Zu den besonderen Vorteilen der erfindungsgemäßen Flüssigkeitsreibungskupplung zählt zunächst, dass nur eine geringe Menge an Kupplungsflüssigkeit erforderlich ist, da aufgrund der zuvor erläuterten Anordnung eine aktive Förderpumpe im Ölreservoir gebildet wird, was hinsichtlich der Kupplungsflüssigkeitsmenge gegenüber dem bekannten Ausnutzen von Zentrifugalkräften zum Füllen der Arbeitskammer vorteilhaft ist.

Ferner wird das Ansprechverhalten der erfindungsgemäßen Flüssigkeitsreibungskupplung aufgrund des niedrigeren Kupplungsflüssigkeitsanteils schneller.

Es ergibt sich ferner eine äußerst kompakte Bauweise, da der Außendurchmesser der Vorratskammer bzw. des Reservoirs größer gemacht werden kann, als der Innendurchmesser der Arbeitskammer.

Die kompakte Bauweise wird noch dadurch verbessert, dass, wie zuvor bereits erläutert, eine Veränderbarkeit des Kupplungsflüssigkeitsflusses ohne Verwendung einer Ventilanordnung möglich gemacht wird.

Das Pumpenelement, das einen Druck aufbaut, wobei ein Volumenstrom durch Reibung der Kupplungsflüssigkeit im vorzugsweise klein gehaltenen Scherspalt erzeugt wird, kann entweder am stationären Kupplungsteil bzw. Kupplungsgehäuse des Wirkorgans (z.B. Pumpenrad, Lüfterrad, Gleichstromkompressor usw.) gelagert werden oder es ist auch eine Lagerung auf der Welle des Flüssigkeitsreibungskupplung möglich.

Der aufgebaute Druck bzw. der erzeugte Volumenstrom ist eine Funktion der Relativdrehzahl des drehbaren Pumpenelementes gegenüber dem Gehäuse, wobei die Relativdrehzahl beispielsweise durch einen Ausgleich des Schleppmomentes der Fluidreibungspumpe gegenüber dem Moment gesteuert werden kann, das durch einen Betätigungsmechanismus bzw. durch eine Bremsvorrichtung erzeugt wird, die beispielsweise als Wirbelstrombremse ausgebildet werden kann. Diese Bremsvorrichtung kann vom Prinzip her als jedwede Art von magnetischer Bremsvorrichtung oder Reibbremse ausgebildet sein. Neben der zuvor genannten Wirbelstrombremse sind weitere Beispiele Elektromotoren, Generatoren oder auch Visko-Bremsen.

Ist als Bremsvorrichtung eine Wirbelstrombremse vorgesehen, wird diese durch ein Magnetfeld betätigt, das in einem Solenoid- bzw. Elektromagneten erzeugt wird, der das Magnetfeld von Permanentmagneten kompensiert, die als weiterer Teil der Bremsvorrichtung vorgesehen sind. Eine derartige Bremsvorrichtung kann als eine Ausfallsicherung derart verwendet werden, dass die variable Förderpumpe bzw. das Pumpenelement bei maximaler Durchflussmenge rotiert (minimaler Drehzahl), und zwar in einem Falle, bei dem keine elektrische Energie an den Solenoid angelegt wird.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1A: eine schematisch stark vereinfachte Prinzipdarstellung einer erfindungsgemäßen Flüssigkeitsreibungskupplung,
- Fig. 1B: eine schematisch stark vereinfachte Darstellung der Einzelheit X in fig. 1A,
- Fig. 2: eine Schnittdarstellung durch eine mögliche Realisierungsvariante der in Fig. 1 als Prinzipdarstellung dargestellten erfindungsgemäßen Flüssigkeitsreibungskupplung,
- Fig. 3: eine Detaildarstellung der Fig. 2 zur Erläuterung des Kupplungsflüssigkeitsflusses,
- Fig. 4: eine vergrößerte Detaildarstellung der Fig. 2 zur Erläuterung des Magnetflusses in der erfindungsgemäßen Flüssigkeitsreibungskupplung, falls als Bremsvorrichtung eine Wirbelstrombremse vorgesehen ist, und
- Fig. 5: eine schematisch leicht vereinfachte perspektivische Darstellung der Flüssigkeitsreibungskupplung gemäß Fig. 2.

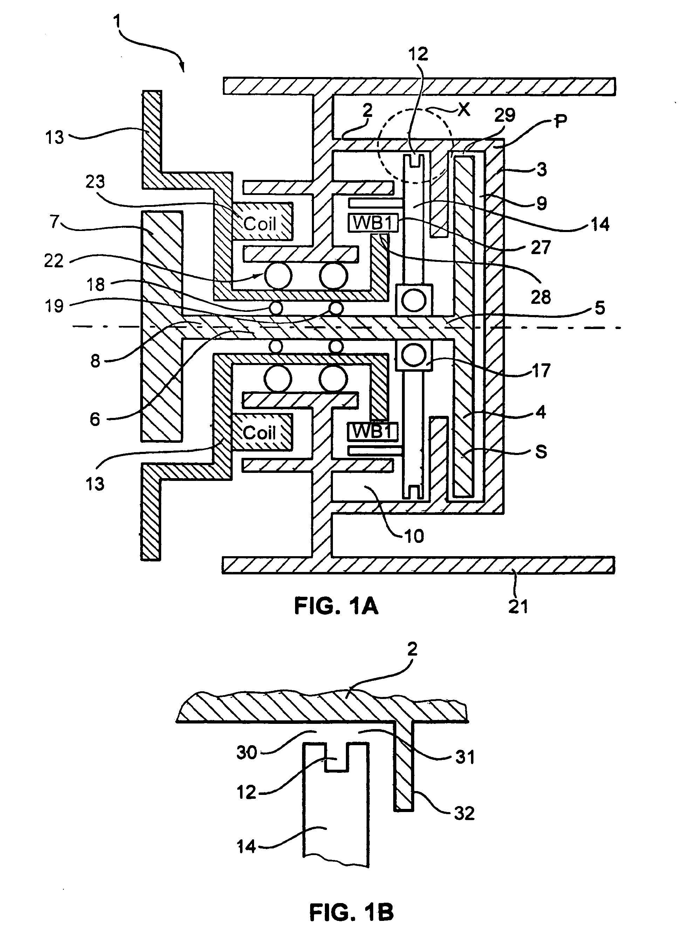

In Fig. 1A ist eine stark vereinfachte Schemadarstellung einer erfindungsgemäßen Flüssigkeitsreibungskupplung 1 dargestellt, die ein Gehäuse aufweist, das üblicherweise aus einem Gehäusekörper 2 und einem Deckel 3 aufgebaut ist.

Im Gehäuse 2, 3 ist eine Kupplungsscheibe 4 angeordnet, die gegenüber dem Gehäuse 2, 3 drehbar ist. Die Kupplungsscheibe 4 ist hierbei drehfest an einem Ende 5 einer zentral innerhalb des Gehäuses 2, 3 gelagerten Welle 6 angeordnet. Am anderen Ende 8 der Welle ist ein schematisch vereinfacht dargestelltes antreibbares Wirkorgan 7 fixiert, das beispielsweise als Pumpenrad oder als Lüfterrad ausgebildet sein kann.

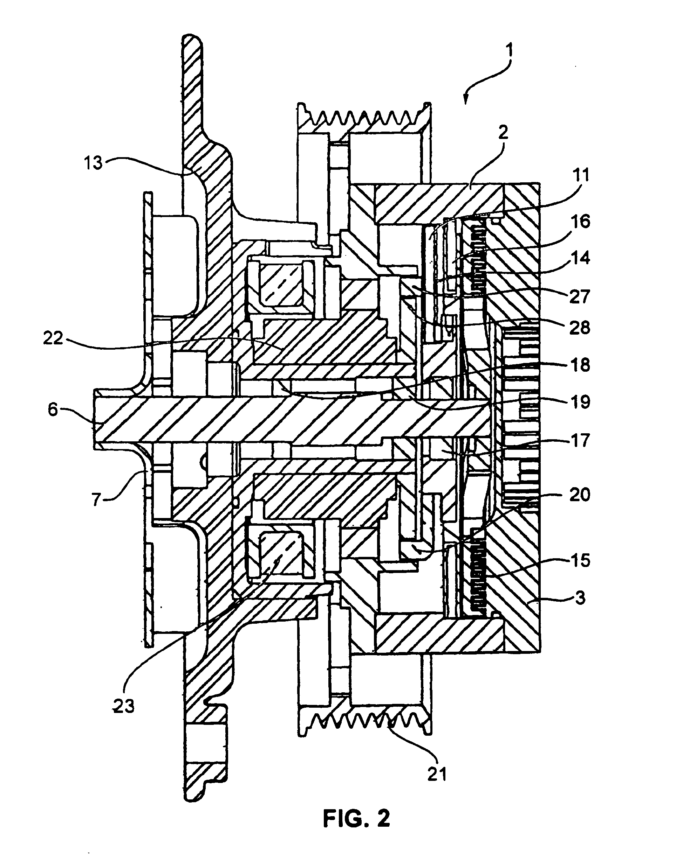

Eine Arbeitskammer 9 ist zwischen dem Gehäuse 2, 3 und der Kupplungsscheibe 4 angeordnet, die, wie aus Fig. 2 ersichtlich ist, Arbeitsspalte 15 aufweist, die aufgrund einer Scherwirkung auf die der Arbeitskammer 9 zugeführten Kupplungsflüssigkeit eine Drehmomentübertragung möglich machen.

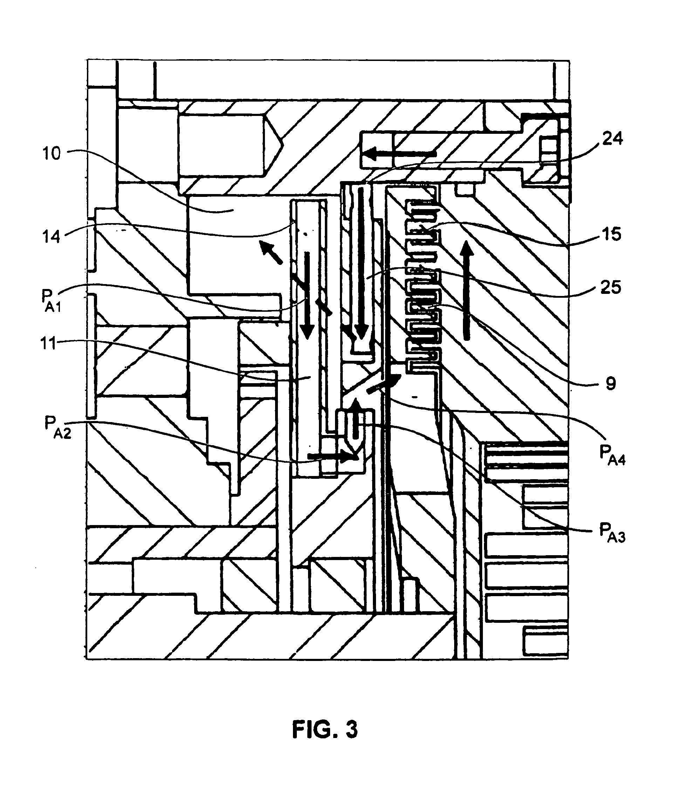

Ferner ist eine Vorratskammer 10 für die genannte Kupplungsflüssigkeit vorgesehen, wobei ein Zuführkanal 11 (siehe Fig. 2 und 3) von der Vorratskammer 10 zur Arbeitskammer 9 führt.

Wie insbesondere aus Fig. 2 ersichtlich ist, ist ferner ein Rückpumpsystem bzw. eine Rückförderpumpe 16 vorgesehen, die zur Rückführung der Kupplungsflüssigkeit von der Arbeitskammer 9 zur Vorratskammer 10 dient.

Mit dem Gehäuse 2, 3 ist ferner ein Antriebsorgan 21, wie beispielsweise eine Riemenscheibe, verbunden. Die Flüssigkeitsreibungskupplung 1 weist ferner ein stationäres Kupplungsteil 13 auf, an dem über ein Hauptlager 22 das Gehäuse 2, 3 gelagert ist. Das stationäre Kupplungsteil 13 ist auf der Welle 6 über Sekundärlager 18 und 19 gelagert.

Wie ferner eine Zusammenschau der Fig. 1 bis 3 zeigt, zeichnet sich die erfindungsgemäße Flüssigkeitsreibungskupplung 1 durch das Vorsehen eines Pumpenelements 14 aus, das im Beispielsfalle über ein Pumpenelement-Lager 17 drehbar auf der Welle 6 gelagert ist. Eine alternative Lagerung des Pumpenelementes 14, beispielsweise am stationären Teil 13, ist jedoch ebenfalls möglich.

Das Pumpenelement 14 weist im dargestellten Beispielsfalle an seinem radialen Außenrand einen Scherspalt 12 auf, der gemäß der Detaildarstellung in Fig. 1B gegenüber dem Gehäusekörper 2 über Dichtspalte 30 und 31 abgedichtet ist. Durch diese Anordnung wird eine variable Förderpumpe gebildet, die, wie eingangs bereits erläutert, aufgrund einer zu erzeugenden Differenzdrehzahl zwischen dem Pumpenelement 14 und dem Gehäuse 2, 3 einen Volumenstrom von Kupplungsflüssigkeit von der Vorratskammer 10 zur Arbeitskammer 9 ermöglicht. Hierbei ist zu betonen, dass die in Fig. 1B in vergrößerter Darstellung gezeigte Anordnung nicht auf eine radiale Ausrichtung des Scherspalts 12 beschränkt ist. Ferner wäre auch eine axiale Realisierung des Scherspalts 12 zusammen mit entsprechenden Dichtspalten gegenüber dem axial benachbarten Gehäuseteil 32 denkbar.

Bezüglich des zuvor erläuterten Volumenstroms ist insbesondere auf die Detaildarstellung der Fig. 3 zu verweisen, in der der Volumenstrom von der Vorratskammer 10 in die Arbeitskammer 9 durch die Pfeile P_{A1} bis P_{A4} deutlich ist. Die übrigen eingezeichneten Pfeile zeigen den zurückgeführten Volumenstrom von der Arbeitskammer 9 in die Vorratskammer 10. Der Volumenstrom von der Vorratskammer 10 in die Arbeitskammer 9 wird durch das zuvor erläuterte Pumpenelement 14 im Zusammenhang mit dem erläuterten Scherspalt 12 erzeugt. Das Pumpenelement 14 und der Scherspalt 12 bilden hierbei eine variable Förderpumpe, deren Wirkprinzip auf der eingangs erläuterten Drehzahldifferenz beruht.

Zur Erzeugung dieser Drehzahldifferenz ist es möglich, das Pumpenelement 14 abbremsbar auszugestalten. Hierfür ist in den Fig. 1A, 2 und 4 als Bremsvorrichtung eine Wirbelstrombremse vorgesehen, wobei jedoch auch jedwede andere Art von geeigneter Bremsvorrichtung in Form einer magnetischen Bremsvorrichtung oder einer Reibbremse denkbar ist.

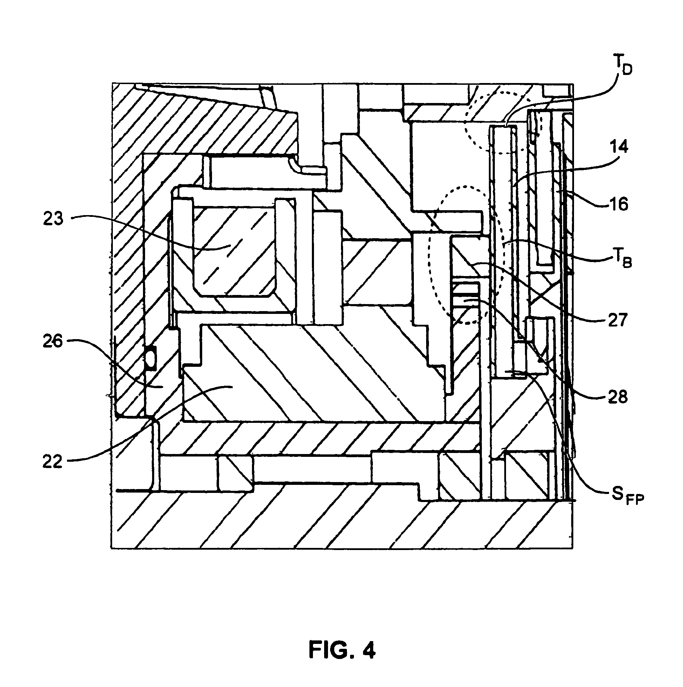

Die dargestellte Wirbelstrombremse weist zunächst einen Elektromagneten bzw. Solenoid 23 auf, der an der aus Fig. 2 ersichtlichen Position gelagert ist. Ferner weist die Bremsvorrichtung Permanentmagnete 28 auf, die benachbart zu einem Wirbelstrombremsenring 27 (bestehend z.B. aus Kupfer) angeordnet sind, wie sich dies im Einzelnen aus der Darstellung der Fig. 1A, 2 und der vergrößerten Darstellung der Fig. 4 ergibt. Hierbei ist in Fig. 4 durch den strichlierten ovalen Kreis das durch die Bremsvorrichtung erzeugbare Bremsmoment T_{B} symbolisiert, während durch den strichlierten ovalen Kreis T_{D} das Drehmoment symbolisiert ist, das durch das Pumpenelement 14 erzeugbar ist. Die Drehzahl des Pumpenelements 14 ist in Fig. 4 durch den Punkt S_{FP} symbolisiert.

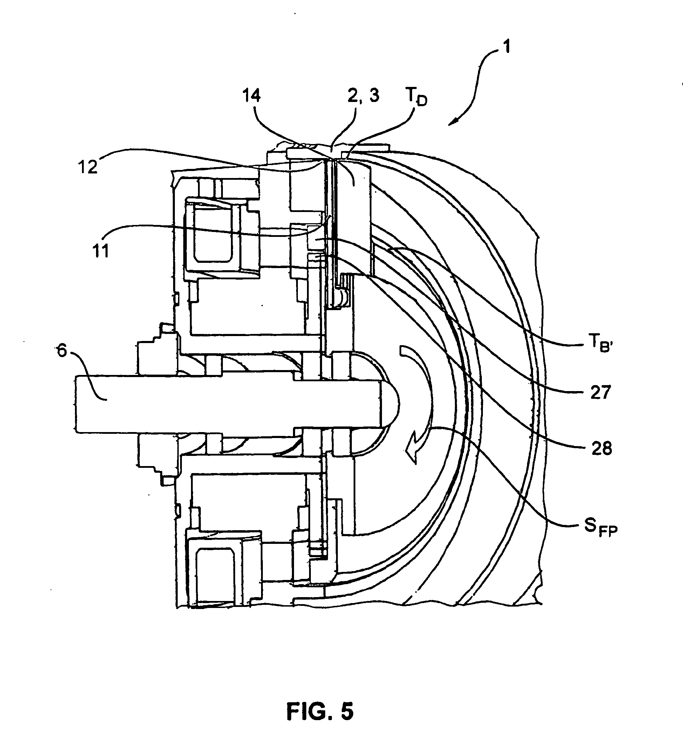

Zur weiteren Erörterung, insbesondere dieser letztgenannten Komponenten, kann ferner auf Fig. 5 Bezug genommen werden.

Neben der schriftlichen Offenbarung der Erfindung wird hiermit explizit auf deren zeichnerische Darstellung in den Fig. 1A, 1B sowie 2 bis 5 Bezug genommen.

### Bezugszeichenliste

- 1: Flüssigkeitsreibungskupplung
- 2, 3: Gehäuse (2: Gehäusekörper, 3: Deckel)
- 4: Kupplungsscheibe
- 5: Ende der Welle 6
- 6: Welle
- 7: Wirkorgan (z.B. Pumpenrad, Lüfterrad usw.)
- 8: zweites Ende der Welle 6
- 9: Arbeitskammer
- 10: Vorratskammer
- 11: Zuführkanal
- 12: Scherspalt
- 13: stationäres Kupplungsteil (Pumpengehäuse)
- 14: Pumpenelement
- 15: Arbeitsspalte
- 16: Rückförderpumpe
- 17: Pumpenelement-Lager
- 18, 19: Sekundärlager
- 20: Bremsvorrichtung
- 21: Antriebsorgan, insbesondere Riemenscheibe am Gehäuse 2, 3
- 22: Hauptlager
- 23: Solenoid/Elektromagnet
- 24: Scherspalt
- 25: Rückführkanal
- 26: Magnetflussweg
- 27: Ring der Wirbelstrombremse
- 28: Permanentmagnete
- 29: Spalt zwischen Kupplungsscheibe 4 und Gehäuse 2, 3
- 30, 31: Dichtspalte
- S_{FP}: Drehzahl des Pumpenelements 14
- T_{B}: Drehmoment der Bremsvorrichtung
- T_{D}: Drehmoment, das durch das Pumpenelement 14 erzeugbar ist

## Patentansprüche

1. Flüssigkeitsreibungskupplung (1)
- mit einem Gehäuse (2, 3)
- mit einer Kupplungsscheibe (4),
■ die gegenüber dem Gehäuse (2, 3) drehbar ist, und
■ die drehbar an einem Ende (5) einer zentral innerhalb des Gehäuses (2, 3) gelagerten Welle (6) angeordnet ist, die an ihrem anderen Ende (8) ein antreibbares Wirkorgan (7) trägt;
- mit einer Arbeitskammer (9) zwischen dem Gehäuse (2, 3) und der Kupplungsscheibe (4);
- mit einer Vorratskammer (10) für Kupplungsflüssigkeit;
- mit einem Zuführkanal (11), der von der Vorratskammer (10) zur Arbeitskammer (9) führt;
- mit einem stationären Kupplungsteil (13), gegenüber dem das Gehäuse (2, 3) drehbar ist, und
- mit einem drehbar gelagerten Pumpenelement (14), das mit dem Gehäuse (2, 3) einen Scherspalt (12) definiert, **dadurch gekennzeichnet,**
- **dass** das Pumpenelement (14) abbremsbar ist.

2. Flüssigkeitsreibungskupplung nach Anspruch 1, **gekennzeichnet durch** eine Bremsvorrichtung zur Abbremsung des Pumpenelements (14).

3. Flüssigkeitsreibungskupplung nach Anspruch 2, **dadurch gekennzeichnet, dass** die Bremsvorrichtung als magnetische Bremsvorrichtung oder Reibbremsvorrichtung ausgebildet ist.

4. Flüssigkeitsreibungskupplung nach einem der Ansprüche 1 bis 3, **dadurch gekennzeichnet, dass** der Scherspalt (12) durch Dichtspalte (30, 31) gegenüber dem Gehäuse (2, 3) begrenzt ist.

## Claims

1. Liquid friction clutch (1)
- having a housing (2, 3),
- having a clutch disk (4)
■ which is rotatable relative to the housing (2, 3) and
■ which is rotatably arranged on an end (5) of a shaft (6) which is mounted centrally within the housing (2, 3), which shaft (6) bears on its other end (8) a driveable active element (7);
- having a working chamber (9) between the housing (2, 3) and the clutch disk (4);
- having a storage chamber (10) for clutch fluid;
- having a supply duct (11) which leads from the storage chamber (10) to the working chamber (9);
- having a stationary clutch part (13) relative to which the housing (2, 3) is rotatable, and
- having a rotatably mounted pump element (14) which, with the housing (2, 3), defines a shear gap (12), **characterized in that**
- the pump element (14) can be braked.

2. Liquid friction clutch according to Claim 1, **characterized by** a brake device for braking the pump element (14).

3. Liquid friction clutch according to Claim 2, **characterized in that** the brake device is designed as a magnetic brake device or friction brake device.

4. Liquid friction clutch according to one of Claims 1 to 3, **characterized in that** the shear gap (12) is delimited with respect to the housing (2, 3) by sealing gaps (30, 31).

## Revendications

1. Embrayage à friction de liquide (1), comprenant :
- un boîtier (2, 3),
- un disque d'embrayage (4),
- qui peut tourner par rapport au boîtier (2, 3), et
- qui est disposé de manière rotative sur une extrémité (5) d'un arbre (6) monté centralement à l'intérieur du boîtier (2, 3), lequel arbre porte à son autre extrémité (8) un organe fonctionnel (7) pouvant être entraîné ;
- une chambre de travail (9) entre le boîtier (2, 3) et le disque d'embrayage (4) ;
- un réservoir (10) de liquide d'embrayage ;
- un canal d'amenée (11), qui conduit du réservoir (10) à la chambre de travail (9) ;
- une partie d'embrayage stationnaire (13), par rapport à laquelle le boîtier (2, 3) peut tourner, et
- un élément de pompe (14) monté à rotation, qui définit avec le boîtier (2, 3) un interstice de cisaillement (12), **caractérisé en ce que**
- l'élément de pompe (14) peut être freiné.

2. Embrayage à friction de liquide selon la revendication 1, **caractérisé par** un dispositif de freinage pour freiner l'élément de pompe (14).

3. Embrayage à friction de liquide selon la revendication 2, **caractérisé en ce que** le dispositif de freinage est réalisé sous la forme d'un dispositif de freinage magnétique ou à friction.

4. Embrayage à friction de liquide selon l'une quelconque des revendications 1 à 3, **caractérisé en ce que** l'interstice de cisaillement (12) est limité par des interstices d'étanchéité (30, 31) par rapport au boîtier (2, 3).
